# EUROPEAN PATENT APPLICATION

(11) **EP 4 428 769 A1**
(43) Date of publication of application: **11.09.2024**
(21) Application number: 23305291.9
(22) Date of filing: 06.03.2023
(51) Int. Cl.: G06N 20/00

(54) **METHOD FOR OPTIMIZING THE DETECTION OF TARGET CASES IN AN IMBALANCED DATASET**

(71) Applicant: BULL SAS, 78340 Les Clayes-Sous-Bois (FR)
(72) Inventor: PATANKAR, Dheeraj, Pune (IN)
(74) Representative: Argyma

(57) **Abstract**

A method for optimizing the detection of target cases in an imbalanced dataset, comprising the steps of generating (S4) a series of training datasets wherein the first training dataset comprises an equal ratio of non-target cases and target cases and wherein the following training datasets of the series comprise a ratio of non-target to target cases that increases for each consecutive training dataset of the series, training (S5) the machine learning model using the machine learning algorithm on each generated training datasets of the series of training datasets and recording the obtained performance score at each iteration, determining (S6) the maximum performance score among the recorded performance scores, determining (S7) the ratio of target to non-target cases for the determined maximum performance score, training (S8) the machine learning model using the machine learning algorithm on a training dataset having said determined ratio of target to non-target cases to obtain an optimized model.

## Description

### [Field of the invention]

The field of the invention relates to machine learning optimization and, more particularly, to a device and a method for method for optimizing the detection of target cases in an imbalanced dataset with a machine learning model trained using a machine learning algorithm.

### [Background of the invention]

Artificial Intelligence (Al) is broadly defined as the capability of a machine to imitate intelligent human behavior. Artificial intelligence systems are used to perform complex tasks in a way that is similar to how humans solve problems. This means machines that can recognize a visual scene, understand a text written in natural language, or perform an action in the physical world. Nowadays, Artificial Intelligence is used in many fields.

Machine learning (ML) is one way to use Al. It was defined in the 1950s by Al pioneer Arthur Samuel as "the field of study that gives computers the ability to learn without explicitly being programmed." Indeed, in some cases, writing a program for a machine to follow is time-consuming or impossible, such as training a computer to recognize pictures of different people. While humans can do this task easily, it's difficult to tell a computer how to do it. Machine learning takes the approach of letting computers learn to program themselves through experience.

Machine learning starts with data, like e.g. numbers, photos, or text, like bank transactions, pictures of people or even bakery items, repair records, time series data from sensors, or sales reports. The data is gathered and prepared to be used as training data, or the information the machine learning model will be trained on. The more data, the better the program.

From there, programmers choose a machine learning model to use, supply the data, and let the computer model train itself to find patterns or make predictions. Over time the human programmer can also tweak the model, including changing its parameters, to help push it toward more accurate results.

Some data is held out from the training data to be used as evaluation data, which tests how accurate the machine learning model is when it is shown new data. The result is a model that can be used in the future with different sets of data.

Successful machine learning algorithms can do different things. The function of a machine learning system can be descriptive, meaning that the system uses the data to explain what happened; predictive, meaning the system uses the data to predict what will happen; or prescriptive, meaning the system will use the data to make suggestions about what action to take.

There are three subcategories of machine learning: supervised, unsupervised and reinforcement.

Supervised machine learning models are trained with labeled data sets, which allow the models to learn and grow more accurate over time. For example, an algorithm would be trained with pictures of dogs and other things, all labeled by humans, and the machine would learn ways to identify pictures of dogs on its own. Supervised machine learning is the most common type used today.

In unsupervised machine learning, a program looks for patterns in unlabeled data. Unsupervised machine learning can find patterns or trends that people aren't explicitly looking for. For example, an unsupervised machine learning program could look through online sales data and identify different types of clients making purchases.

Reinforcement machine learning trains machines through trial and error to take the best action by establishing a reward system. Reinforcement learning can train models to play games or train autonomous vehicles to drive by telling the machine when it made the right decisions, which helps it learn over time what actions it should take.

Classification problems are quite common in the machine learning world. In the classification problem, the class label is trying to be predicted by studying the input data or predictor where the target or output variable is a categorical variable in nature.

Sometimes, there are instances where one of the target class labels' numbers of observation is significantly lower than other class labels. This type of dataset is called an imbalanced class dataset which is very common in practical classification scenarios. In other words, imbalanced data refers to those types of datasets where the target class has an uneven distribution of observations, i.e. one class label has a very high number of observations and the other has a very low number of observations.

In today's world, multiple kinds of imbalanced datasets exist. Examples are detection of frauds done using credit cards, disease diagnosis, criminal investigations, fake social profiles and extreme events like natural disasters etc. While such events are comparatively rare, the associated cost for an individual or the society, is very high.

For example, a bank that issues a credit card to its customers will be concerned with fraudulent transactions. For example, if the bank finds that for each 2000 transactions there are only 30 fraudulent transactions recorded, it means that the number of frauds per 100 transactions is less than 2%, or more than 98% transaction is "No Fraud" in nature. Here, the class "No Fraud" is called the majority class, and the much smaller in size "Fraud" class is called the minority class.

We know that artificial intelligence and machine learning capabilities help to detect such target cases through extensive analysis of past and ongoing business transactions. For an imbalanced dataset, the target cases are extremely low in number (typically 0.1% or lower) and it becomes increasing hard to detect them and even harder to predict if a new case or new event occurring is truly a desired target case with high probability.

Any usual approach to solving this kind of machine learning problem often yields inappropriate results. Indeed, typically most of the machine learning based model perform well in training but show a significant performance degrade in real life situation when there is a substantial increase in non-targeted cases. As a result, this approach fails in assessing production environments.

It is therefore an object of the present invention to provide a device and method to remedy these drawbacks.

### [Summary of the invention]

To this end, the present invention relates to a method for optimizing the detection of target cases in an imbalanced dataset by a machine learning model trained using a machine learning algorithm, said machine learning algorithm outputting a performance score when applied to a dataset, said imbalanced dataset being characterized by a number of non-target cases grouped in a majority class and a number of target cases grouped in a minority class for one given parameter or several given parameters, said method comprising the steps of:
- generating a series of training datasets wherein the first training dataset comprises an equal ratio of non-target cases and target cases and wherein the following training datasets of the series comprise a ratio of non-target to target cases that increases for each consecutive training dataset of the series,
- training the machine learning model using the machine learning algorithm on each generated training datasets of the series of training datasets and recording the obtained performance score at each iteration,
- determining the maximum performance score among the recorded performance scores,
- determining the ratio of target to non-target cases for the determined maximum performance score,
- training the machine learning model using the machine learning algorithm on a training dataset having said determined ratio of target to non-target cases, called "optimized training dataset" to obtain an optimized model.

Using a series of training datasets with different ratio, in increasing order, allows finding a maximum performance score corresponding to an optimized machine learning model. The number of training datasets of the series needs to be high enough to ensure to detect the maximum performance score which can be determined, therefore allowing further training the machine learning model in the most optimized way to obtain the optimal machine learning model. Once trained with the optimal ratio of non-target to target cases, the model will be optimized and show high probability of detection of target cases.

Preferably, the method further comprises the steps of extracting a subset, called "test dataset", from the imbalanced dataset, applying the optimized model to said extracted test dataset to obtain a test performance score, comparing the test performance score to the maximum performance score, and validating the optimized model when the difference between the maximum performance score and the test performance score is smaller than a predetermined model-optimized threshold.

Thus, once the desired level of performance of the training is done, the trained machine learning model is tested (i.e. validated) on the test dataset to see if similar performance could be achieved on totally new test data. If so, the machine learning can be considered as optimized for production data. In other words, if the test dataset (which is a new data for the trained model) shows similar performances, then the training model has been optimized.

Preferably, in the series, the increase of the non-targeted cases count is realized in increments from the second training dataset of the series, for example increments of 10: 1:1, 10:1, 20:1, 30:1, etc. The increment may be dynamically adjusted in real time to detect the peak performance.

Advantageously, the training datasets of the series are generated based on the imbalanced dataset, for example by extracting of a portion of data of said imbalanced dataset, called "reference training dataset", and then by modifying said reference training dataset to obtain the training datasets of the series with predefined increasing ratios.

Preferably, training datasets are large enough, preferably at least 75 % of the imbalanced dataset, to change the ratio and keep checking if the model is tuned properly.

In an embodiment, the method comprises the steps of extracting a subset, called "reference training dataset", from the imbalanced dataset, applying the machine learning model to said reference training dataset to obtain a reference baseline model and a reference performance score, comparing the maximum performance score with said reference performance score and validating the optimized model when the reference performance score is below the maximum performance score. The reference baseline model for a given machine learning algorithm provides the performance level in its base form and allows confirming that the under-sampling method is having a positive effect on the model performance.

In an embodiment, the extracting step comprises splitting, preferably in a random manner, the imbalanced dataset between the test dataset and a reference training dataset, said reference training dataset being disjoint from the test dataset. In this case, the reference training dataset is the initial «master» training dataset from which the series is generated through random selection.

Advantageously, from the imbalanced dataset, the test dataset may be a selection of 20% (or 25%) of total data available, the remaining 80% (respectively 75 %) being used as a base dataset for generating the training datasets of the series with their different ratios.

In an embodiment, the method comprises a step of receiving the imbalanced dataset, for example from another device like a server, a computer or a smartphone.

In an embodiment, the method comprises a step of selecting a machine learning algorithm for which the performance needs to be optimized.

Advantageously, the method comprises a step of filtering the imbalanced dataset to keep only data associated with the given parameter. Typically, a dataset has columns having tens and hundreds of parameters (features) available. To limit analysis and computing cost, the key parameters can be identified using feature correlation analysis that are important from machine learning modeling perspective and the other parameters can be safely taken out from the analysis.

In an embodiment, the method comprises a step of enhancing the optimized model. Each machine learning model typically has multiple hyperparameters to be tuned to achieved a desired performance level of the trained model. Once the desired performance level is achieved, the machine learning model can be further optimized by other techniques such as removing the outliers, selective feature focus, principal component analysis etc. If these data engineering techniques improve the performance level, we can optimize the machine learning model further by applying them one after another.

Since the target cases are very limited in number in the imbalanced dataset, these target cases are split in both the training datasets of the series and the test dataset. In this way, the algorithm has at least some of the target cases to learn from both in the training datasets of the series and in the test dataset to test the optimized model. When the test dataset is disjoint from the reference training dataset, the target cases of the test dataset remain new to the optimized model, which allows confirming that said model is practically optimized.

The invention also relates to a computer program comprising instructions which, when the program is executed by a computer, cause the computer to carry out the steps of the method as presented before.

The invention also relates to a device for optimizing the detection of target cases in an imbalanced dataset with a machine learning model trained using a machine learning algorithm, said machine learning algorithm outputting a performance score when applied to a dataset, said imbalanced dataset being characterized by a number of non-target cases grouped in a majority class and a number of target cases grouped in a minority class for a given parameter (or a few given parameters), said device being configured to:
- generate a series of training datasets wherein the first training dataset comprises an equal ratio of non-target cases and target cases and wherein the following training datasets of the series comprise a ratio of non-target to target cases that increases for each consecutive training dataset of the series,
- train the machine learning model using the machine learning algorithm on each generated training datasets of the series of training datasets and recording the obtained performance score at each iteration,
- determine the maximum performance score among the recorded performance scores,
- determine the ratio of target to non-target cases for the determined maximum performance score,
- train the machine learning model using the machine learning algorithm on a training dataset having said determined ratio of target to non-target cases, called "optimized training dataset" to obtain an optimized model.

Preferably, the device is configured to:
- extract a subset, called "test dataset", from the imbalanced dataset,
- apply the optimized model to said extracted test dataset to obtain a test performance score,
- compare the test performance score to the maximum performance score,
- validate the trained machine learning model when the difference between the maximum performance score and the test performance score is smaller than a predetermined model-optimized threshold. In other words, the test performance score shall be the closest possible to the maximum performance score to validate the trained machine learning model (e.g. the difference may be less than 5% or 10% of the maximum performance score to validate the model).

In an embodiment, the device is configured to, in the series, increase the non-targeted cases count in increments of ten from the second training dataset: 10:1, 20:1, 30: 1, etc.

In an embodiment, the device is configured to generate the training datasets of the series based on the imbalanced dataset, for example by extracting of a portion of data of said imbalanced dataset, called "reference training dataset", and by further modifying said reference training dataset to obtain the training datasets of the series with increasing ratios. In this case, the reference training dataset is the initial «master» training dataset from which the series is generated through random selection.

In an embodiment, the device is configured to extract a subset, called "reference training dataset", from the imbalanced dataset, to apply the optimized model to said reference training dataset to obtain a reference baseline model and a reference performance score, to compare the maximum performance score with said reference performance score and to validate the optimized model when the reference performance score is below the optimized performance score. The reference baseline model for a given machine learning model provides the performance level in its base form. It allows confirming that the under-sampling method is having a positive effect on the model performance.

In an embodiment, the device is configured to, during the extracting step, split, preferably in a random manner, the imbalanced dataset between the test dataset and a reference training dataset, said reference training dataset being disjoint from the test dataset.

From the imbalanced dataset, the test dataset may be a selection of 20% (or 25%) of total data available, the remaining 80% (respectively 75 %) being used as a base dataset for generating the training datasets of the series with their different ratios.

In an embodiment, the device is configured to receive the imbalanced dataset.

In an embodiment, the device is configured to select a machine learning algorithm (for which the performance needs to be optimized).

In an embodiment, the device is configured to filter the imbalanced dataset to keep only data associated with the given parameter. Typically, a dataset has columns having tens and hundreds of parameters (features) available. To limit analysis and computing cost, the key parameters can be identified using feature correlation analysis that are important from machine learning modeling perspective and the other parameters can be safely taken out from the analysis.

The device is configured to enhance the optimized model. Each machine learning model typically has multiple hyperparameters to be tuned to achieved a desired performance level of the trained model. Once the desired performance level is achieved, the machine learning model can be further optimized by other techniques such as removing the outliers, selective feature focus, principal component analysis etc. If these data engineering techniques improve the performance level, we can optimize the machine learning model further by applying them one after another.

Since the target cases are very limited in number in the imbalanced dataset, these target cases are split in both the training datasets of the series and the test dataset. In this way, the algorithm has at least some of the target cases to learn from both in the training datasets of the series and in the test dataset to test the optimized model. When the test dataset is disjoint from the reference training dataset, the target cases of the test dataset remain new to the optimized model, which allows confirming that said model is practically optimized.

### [Brief description of the drawings]

These and other features, aspects, and advantages of the present invention are better understood with regard to the following Detailed Description of the Preferred Embodiments, appended Claims, and accompanying Figures, where:
FIGURE 1 schematically illustrates an embodiment of the device according to the invention.
FIGURE 2 schematically illustrates an embodiment of the method according to the invention.

### [Detailed description]

The device according to the invention allows to optimize the detection of target cases related to one or several parameters in an imbalanced dataset with a machine learning model trained using a machine learning algorithm.

An imbalanced dataset comprises data representing a subset of target cases and data representing a subset of non-target cases, the proportion of each type being imbalanced in the dataset. Target cases represent the minority among all the cases and non-target cases represent the majority class for the given parameter(s). For example, for a bank, an imbalanced dataset may relate to payment data made with credit cards of the customers. In this case, non-target cases correspond to data representing non-fraudulent payments and target cases correspond to data representing frauds that the bank wishes to detect using a machine learning algorithm.

The machine learning algorithm is configured to output a performance score when applied to any dataset. The performance score indicates the level of confidence of the detection of non-target cases.

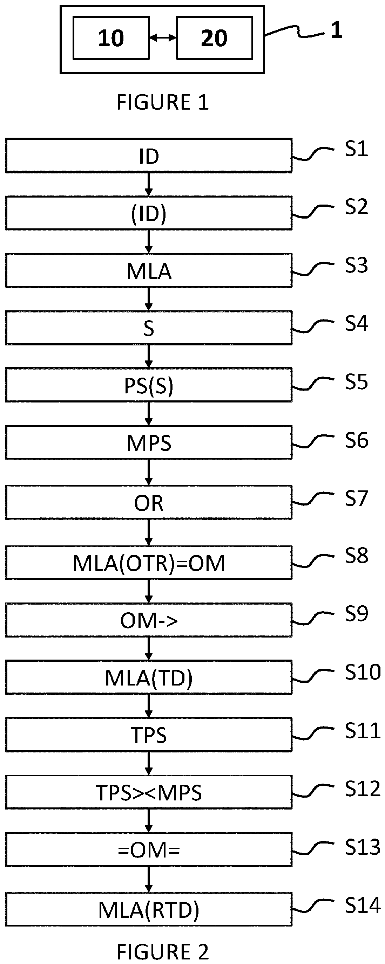

An example of the device according to the invention will now be described in reference to figure 1 and figure 2.

The device 1 comprises a processing module 10 and a memory zone 20. The processing module 10 comprises one or more processors configured to process data. The memory zone 20 is configured to store datasets. The device 1 may be e.g. a server, a computer or a smartphone.

The device 1 is configured to measure and/or generate and/or receive an imbalanced dataset ID and store said imbalanced dataset in the memory zone 20. Each imbalanced dataset ID may comprise a plurality of data related to a plurality of parameters.

Preferably, the device 1 is configured to filter the imbalanced dataset ID to keep only data associated with one or several given parameter(s). Typically, a dataset may have columns having tens or hundreds of parameters (features) available. To limit analysis and computing cost, the key parameters may be identified using feature correlation analysis that are important from machine learning modeling perspective and the other parameters may be safely taken out from the analysis.

The device 1 is configured to select a machine learning algorithm MLA, for which the performance needs to be optimized. The machine learning algorithm MLA may be stored in the memory zone 20.

The device 1 is configured to generate a series S of training datasets wherein the first training dataset comprises an equal ratio of non-target cases and target cases and wherein the following training datasets of the series S comprise a ratio of non-target to target cases that increases for each consecutive training dataset of the series S.

In this example, the device 1 is configured to generate the training datasets of the series S based on the imbalanced dataset ID by extracting of a portion of data of said imbalanced dataset ID, called "reference training dataset" RTD, and further modifying said reference training dataset RTD to obtain the training datasets of the series S with increasing ratios.

In this example, the device 1 is configured to, during the extracting step, split, preferably in a random manner, the imbalanced dataset ID between a test dataset TD and the reference training dataset RTD, said reference training dataset RTD being disjoint from the test dataset TD. Since the target cases are very limited in number in the imbalanced dataset ID, these target cases are split in both the training datasets of the series S and the test dataset TD. In this way, the algorithm has at least some of the target cases to learn from both in the training datasets of the series S and in the test dataset TD to test the optimized model OM, as described hereafter. When the test dataset TD is disjoint from the reference training dataset RTD, the target cases of the test dataset TD remain new to the optimized model OM, which allows confirming that said model is practically optimized.

From the imbalanced dataset, the test dataset TD may be a selection of 20% (or 25%) of total data available, the remaining 80% (respectively 75 %) being used as a base dataset for generating the training datasets of the series S with their different ratios.

The device 1 is configured to train several machine learning models using a selected machine learning algorithm MLA on each generated training datasets of the series S of training datasets and recording the performance score PS obtained for each model.

The device 1 is configured to determine the maximum performance score MPS among the recorded performance scores PS.

The device 1 is configured to determine the ratio of target to non-target cases for the determined maximum performance score MPS, called "optimized ratio" OR.

The device 1 is configured to train the machine learning model using a training dataset having said optimized ratio OR, called "optimized training dataset", to obtain an optimized model OM.

The device 1 is configured to compare a test performance score TPS, obtained by applying the optimized model OM to the test dataset TD, to the maximum performance score MPS.

The device 1 is configured to validate the optimized model OM when the difference between the maximum performance score MPS and the test performance score TPS is smaller than a predetermined model-optimized threshold.

The device 1 is configured to, in the series, increase the non-targeted cases count in increments with a factor 10, for example 10:1, 20:1, ...

In this example, the device 1 is configured to apply the machine learning algorithm to the reference training dataset RTD to obtain a reference baseline model and a reference performance score, to compare the maximum performance score MPS with said reference performance score RPS and to validate the optimized model OM when maximum performance score MPS is greater than the reference performance score RPS. The reference baseline model for a given machine learning algorithm provides the performance level in its base form. It allows confirming that the under-sampling method is having a positive effect on the model performance or not.

The device 1 is configured to enhance the optimized model OM. Each machine learning model typically has multiple hyperparameters to be tuned to achieved a desired performance level of the trained model. Once the desired performance level is achieved, the optimized model OM may be further optimized by other techniques such as removing the outliers, selective feature focus, principal component analysis etc. If these data engineering techniques improve the performance level, we can optimize the machine learning model further by applying them one after another.

The operation of the method will now be described in reference to figure 2.

In a step S1, the device 1 receives (or measures or generates) an imbalanced dataset I D.

In a step S2, the device 1 filters the imbalanced dataset ID to keep only data associated with one or several given parameter(s), for example the fraud detection in the case of bank credit card transactions.

In a step S3, the device 1 selects a machine learning algorithm MLA, for which the performance needs to be optimized.

In a step S4, the device 1 generates a series S of training datasets. The first training dataset of the series comprises an equal ratio (1:1) of non-target cases (50%) and target cases (50%). The second training datasets of the series comprises a greater ratio of non-target to target cases that the ratio of the first training dataset, for example 10:1. The third training datasets of the series comprises a greater ratio of non-target to target cases that the ratio of the second training dataset, for example 20:1, etc. until the n-th training dataset. The number of training dataset may be greater than 5 or 10 to increase the range of performance scores obtained when training the machine learning algorithm MLA at a next step (S6). However, there is no number restriction as such. The ratio may be adjusted in small steps initially so that a peak performance can be detected. The ratio of the n-th training dataset may be greater than 100:1 to fit real cases (e.g. for bank credit card transactions, the ratio of fraud may be lower than 1 %). The training datasets of the series S are generated based on a reference training dataset RTD, which is extracted from the imbalanced dataset ID. The reference training dataset RTD may be built on a random selection in the imbalanced dataset ID for ensuring that it has some target cases and is then modified to obtain the training datasets of the series S with increasing ratios.

At the same time, the device 1 extracts another subset, called "test dataset" TD, from the imbalanced dataset ID. For example, the filtered imbalanced dataset ID may be split randomly between the reference training dataset RTD (80 % of the data) and the test dataset TD (20 % of the data). Advantageously, the device 1 check or ensures that there are target cases in both the reference training dataset RTD and the test dataset TD to further train the machine learning model in a relevant manner.

In a step S5, the device 1 trains the machine learning model using the selected machine learning algorithm MLA on each generated training datasets of the series S of training datasets and records the obtained performance score PS for each model trained with a training dataset of the series S. The training of a machine learning model being known as such from the skilled person, it will not be described in detail here.

In a step S6, the device 1 determines the maximum performance score MPS among the recorded performance scores.

In a step S7, the device 1 determines the ratio of target to non-target cases for the determined maximum performance score, called "optimized ratio" OR.

In a step S8, the device 1 trains the machine learning model using the selected machine learning algorithm MLA on a training dataset having said optimized ratio OR, called "optimized training dataset" OTR, to obtain an optimized model OM. This optimized training dataset OTR may be the one of the series used to obtain said maximum performance score MPS or another training dataset having this optimized ratio OR (for example a new dataset extracted from the original imbalanced dataset ID which is modified to adjust the ratio to the optimized ratio OR).

Advantageously, in a step S9, the device 1 may enhance the optimized model OM. Each machine learning model typically has multiple hyperparameters to be tuned to achieved a desired performance level of the trained model. Once the desired performance level is achieved, the machine learning model can be further optimized by other techniques such as removing the outliers, selective feature focus, principal component analysis etc. If these data engineering techniques improve the performance level, we can optimize the machine learning model further by applying them one after another.

In a step S10, the device 1 applies the optimized model OM, optionally enhanced at step S9, to the extracted test dataset TD in a step S11 to obtain a test performance score TPS.

In a step S12, the device 1 compares the test performance score TPS to the maximum performance score MPS and validates the optimized model OM in a step S13 when the difference between the maximum performance score MPS and the test performance score TPS is smaller than a predetermined model-optimized threshold. Training the test dataset TD allows to check if similar performances can be achieved on totally new test data compare to the optimized training dataset. If so, the machine learning is considered as optimized for production data.

Optionally, in a step S14, the device 1 may apply the machine learning algorithm MLA to the reference training dataset RTD to obtain a reference baseline model and a reference performance score RPS, then compare the maximum performance score MPS with said reference performance score RPS and finally validate the optimized model OM when the reference performance score RPS is below the maximum performance score MPS. The reference baseline model for a given machine learning algorithm MLA provides the performance level in its base form. It allows confirming that the under-sampling method has or not a positive effect on the model performance and choose the most relevant model between the two.

The optimized model OM allows then to detect target cases in any imbalanced dataset ID in an optimized manner. In particular, the device 1 and method according to the invention allow therefore efficiently, rapidly and easily optimizing a machine learning algorithm MLA to obtain an optimized machine learning model.

Those of skill in the art understand that the invention includes all possible combinations and uses of particular features described in the Specification. Those of skill in the art understand that the invention is not limited to or by the description of embodiments given in the Specification. Those of skill in the art also understand that the terminology used for describing particular embodiments does not limit the scope or breadth of the invention.

## Claims

1. A method for optimizing the detection of target cases in an imbalanced dataset (ID) by a machine learning model trained using a machine learning algorithm (MLA), said machine learning algorithm (MLA) outputting a performance score (PS) when applied to a dataset, said imbalanced dataset (ID) being **characterized by** a number of non-target cases grouped in a majority class and a number of target cases grouped in a minority class for at least one given parameter, said method comprising the steps of:
- generating (S4) a series (S) of training datasets wherein the first training dataset comprises an equal ratio of non-target cases and target cases and wherein the following training datasets of the series (S) comprise a ratio of non-target to target cases that increases for each consecutive training dataset of the series (S),
- training (S5) the machine learning model using the machine learning algorithm on each generated training datasets of the series (S) of training datasets and recording the obtained performance score (PS) at each iteration,
- determining (S6) the maximum performance score (MPS) among the recorded performance scores (PS),
- determining (S7) the ratio of target to non-target cases (OR) for the determined maximum performance score (MPS),
- training (S8) the machine learning model using the machine learning algorithm (MLA) on a training dataset having said determined ratio of target to non-target cases (OM), called "optimized training dataset" (OTR) to obtain an optimized model (OM).

2. The method according to claim 1, further comprising the steps of:
- extracting a subset, called "test dataset" (TD), from the imbalanced dataset (ID),
- applying the optimized model (OM) to said extracted test dataset to obtain a test performance score (TPS),
- comparing the test performance score (TPS) to the maximum performance score (MPS),
- validating the optimized model (OM) when the difference between the maximum performance score (MPS) and the test performance score (TPS) is smaller than a predetermined model-optimized threshold.

3. The method according to any of the preceding claims, wherein, in the series, the increase of the non-targeted cases count is realized in increments from the second training dataset of the series (S).

4. The method according to any of the preceding claims, wherein the training datasets of the series (S) are generated based on the imbalanced dataset (ID) by extracting of a portion of data of said imbalanced dataset (ID) , called "reference training dataset" (RTD), and then modifying said reference training dataset (RTD) to obtain the training datasets of the series (S) with predefined increasing ratios.

5. The method according to any of the preceding claims, said method comprising the steps of extracting a subset, called "reference training dataset" (RTD), from the imbalanced dataset (ID), applying the machine learning model to said reference training dataset (RTD) to obtain a reference baseline model and a reference performance score (RPS), comparing the maximum performance score (MPS) with said reference performance score (RPS) and validating the optimized model (OM) when the reference performance score (RPS) is below the maximum performance score (MPS).

6. The method according to any of claims 2 to 5, wherein the extracting step comprises splitting, preferably in a random manner, the imbalanced dataset (ID) between the test dataset (TD) and a reference training dataset (RTD), said reference training dataset (RTD) being disjoint from the test dataset (TD).

7. The method according to the preceding claim, from the imbalanced dataset (ID), the test dataset (TD) may be a selection of 20% of total data available, the remaining 80% being used as a base dataset for generating the training datasets of the series (S) with their different ratios.

8. The method according to any of the preceding claims, said method comprising a step of receiving the imbalanced dataset (ID).

9. The method according to any of the preceding claims, said method comprising a step of selecting a machine learning algorithm (MLA).

10. The method according to any of the preceding claims, said method comprising a step of filtering the imbalanced dataset (ID) to keep only data associated with the given parameter.

11. The method according to any of the preceding claims, said method comprising a step of enhancing the optimized model (OM).

12. A computer program comprising instructions which, when the program is executed by a computer, cause the computer to carry out the steps of the method according to any one of the preceding claims.

13. A device (1) for optimizing the detection of target cases in an imbalanced dataset (ID) with a machine learning model trained using a machine learning algorithm (MLA), said machine learning algorithm (MLA) outputting a performance score (PS) when applied to a dataset, said imbalanced dataset (ID) being **characterized by** a number of non-target cases grouped in a majority class and a number of target cases grouped in a minority class for at least one given parameter, said device (1) being configured to:
- generate a series (S) of training datasets wherein the first training dataset comprises an equal ratio of non-target cases and target cases and wherein the following training datasets of the series (S) comprise a ratio of non-target to target cases that increases for each consecutive training dataset of the series (S),
- train the machine learning model using the machine learning algorithm (MLA) on each generated training datasets of the series (S) of training datasets and recording the obtained performance score (PS) at each iteration,
- determine the maximum performance score (MPS) among the recorded performance scores (PS),
- determine the ratio of target to non-target cases for the determined maximum performance score (MPS),
- train the machine learning model using the machine learning algorithm (MLA) on a training dataset having said determined ratio of target to non-target cases, called "optimized training dataset" (OTR) to obtain an optimized model (OM).

14. The device (1) according to the preceding claim, said device (1) being further configured to:
- extract a subset, called "test dataset" (TD), from the imbalanced dataset (ID),
- apply the optimized model (OM) to said extracted test dataset (TD) to obtain a test performance score (TPS),
- compare the test performance score (TPS) to the maximum performance score (MPS),
- validate the trained machine learning model when the difference between the maximum performance score (MPS) and the test performance score (TPS) is smaller than a predetermined model-optimized threshold.

15. The device (1) according to any of claims 13 to 14, said device (1) being configured to generate the training datasets of the series (S) based on the imbalanced dataset (ID) by extracting of a portion of data of said imbalanced dataset (ID), called "reference training dataset" (RTD), and further modifying said reference training dataset (RTD) to obtain the training datasets of the series (S) with increasing ratios.
